# EUROPEAN PATENT APPLICATION

(11) **EP 4 597 697 A1**
(43) Date of publication of application: **06.08.2025**
(21) Application number: 24218050.3
(22) Date of filing: 06.12.2024
(51) Int. Cl.: H01M 50/107, H01M 50/152, H01M 50/342, H01M 50/578

(54) **SECONDARY BATTERY**

(30) Priority: 23.01.2024 KR 20240010035
(71) Applicant: SAMSUNG SDI CO., LTD., Yongin-si, Gyeonggi-do 17084 (KR)
(72) Inventor: Kim, Dae Kyu, Yongin-si, Gyeonggi-do 17084 (KR)
(74) Representative: Gulde & Partner

(57) **Abstract**

Provided is a secondary battery including an electrode assembly, in which a notch is provided in a cap-up so that the cap-up is ruptured at a set internal pressure so a gas inside the battery is easily discharged to improve stability of the battery, preventing chain rupture or explosion. The secondary battery includes an electrode assembly, a can configured to accommodate the electrode assembly, and a cap assembly configured to seal an upper portion of the can and having a cap-up comprising a base plate, a terminal part protruding upwardly from an upper side of the base plate and disposed at a center of the cap-up, and a connection part configured to connect the base plate to the terminal part. A notch is provided in at least one of the base plate, the terminal part, or the connection part to be ruptured at a set pressure within the can.

## Description

### FIELD

Aspects of embodiments of the present disclosure relate to a secondary battery improved in stability.

### BACKGROUND

A secondary battery is battery that is chargeable and dischargeable, unlike a primary battery that is not chargeable. Low-capacity batteries including a battery cell in the form of a pack may be used in small portable electronic devices such as smartphones and digital cameras, and a high capacity battery module including tens to hundreds of battery packs connected to each other may be used as a power source for driving motors, e.g., of hybrid vehicles, electric vehicles, power tools, hand vacuum cleaners, drones, and the like.

In secondary batteries, an internal temperature of the battery rises due to abnormal usage conditions such as short circuit or overcharging, a gas is generated, and a pressure inside the battery rises.

For example, in lithium secondary batteries, if overcharging occurs, an electrolyte is decomposed to release gases such as carbon dioxide or carbon monoxide, thereby increasing an internal pressure of the battery. In addition, if overcurrent flows due to the overdischarge or short circuit, a temperature inside the battery rises, and the electrolyte is turned into a gas. As a result, the pressure and temperature inside the battery rise, and in particular, there is a risk of ignition, which presents a safety risk. This phenomenon causes overall deterioration in performance and lifespan characteristics of the battery.

The above information disclosed in this Background section is for enhancement of understanding of the background of the present disclosure, and therefore, it may contain information that does not constitute related (or prior) art.

### SUMMARY

The invention is defined by the appended claims. The description that follows is subjected to this limitation. Any disclosure lying outside the scope of said claims is only intended for illustrative as well as comparative purposes. Embodiments of the present disclosure provide a secondary battery that is advantageous in terms of stability by providing a notch in a cap-up to affect gas emission with a function similar to a safety vent.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to some embodiments, a secondary battery includes: an electrode assembly; a can configured to accommodate the electrode assembly; and a cap assembly configured to seal an upper portion of the can and provided with a cap-up, wherein the cap-up includes: a base plate; a terminal part protruding upwardly from an upper side of the base plate and disposed at a center of the cap-up; and a connection part configured to connect the base plate to the terminal part, wherein a notch is provided in at least one of the base plate, the terminal part, and the connection part so as to be ruptured at a set pressure within the can.

The notch may be provided in a multi-stage trench shape.

The base plate may be provided in a planar circular shape, and the notch may be provided in the base plate.

The notch may have a circular ring shape disposed along a circumference of the base plate.

The notch may comprise a plurality of notches spaced at a regular internal from each other along a circumference of the base plate.

The notch may comprise a plurality of notches provided in straight line-shapes radiating outward from an inside of the base plate, and the plurality of notches may be provided at regular intervals along a circumference of the base plate.

The notch may be disposed along a circumference of the connection part on at least one surface of the connection part.

The terminal part may be provided in a planar circular shape, and the notch may be provided in the terminal part.

The notch may have a circular ring shape disposed along a circumference of the terminal part.

The notch may be branched into at least three pieces at a center of the terminal part.

The notch may have a shape of at least two or more straight lines that are intersected at a center of the terminal part.

The notch may comprise a plurality of notches provided in a straight line-shapes radiating outward from an inside of the terminal part, and the plurality of notches may be provided at regular intervals along a circumference of the terminal part.

A portion of the cap-up at which the notch is provided may have a thickness less than about 0.34 times a thickness of the cap-up.

An angle of the notch may range of about 35° to about 80°.

The notch may be provided in multiple stages.

The device may further include a safety vent comprising a protrusion installed at a lower portion of the cap-up to protrude downward so as to be electrically connected to the electrode assembly, wherein the safety vent may include a curling part coupled to the base plate in a shape that surrounds an edge of the base plate.

The notch may be provided in the base plate, and the notch may be disposed at a position of about 0.5 mm to about 0.7 mm from an end of the curling part.

Each of the base plate, the connection part, and the terminal part may have a respective top surface and a respective bottom surface, the notch may be provided in the respective bottom surface of at least one of the base plate, the connection part, or the terminal part, and the notch may include: a first surface disposed between the top and bottom surfaces of each of the base plate, the connection part, and the terminal part; a pair of second surfaces disposed on opposing surfaces of the first surface of the notch and spaced apart from each other; a pair of third surfaces disposed on surfaces of the pair of second surfaces and spaced apart from each other; and a fourth surface disposed spaced apart from surfaces of the pair of third surfaces and configured to connect the third surface to the respective bottom surface.

The first surface of the notch and the pair of third surfaces may be parallel to the top surface and the bottom surface of each of the base plate, the connection part, and the terminal part, and the pair of second surfaces and the pair of fourth surfaces may be provided to be inclined.

Each of the base plate, the connection part, and the terminal part may have a respective top surface and a respective bottom surface, the notch may be provided in the respective bottom surface of at least one of the base plate, the connection part, or the terminal part, and the notch may include: a first surface disposed between the top and bottom surfaces of each of the base plate, the connection part, and the terminal part; a pair of second surfaces disposed on opposing surfaces of the first surface and spaced apart from each other; a pair of third surfaces disposed on surfaces of the pair of second surfaces and spaced apart from each other; a pair of fourth surfaces disposed on surfaces of the pair of third surfaces and spaced apart from each other; a pair of fifth surfaces disposed on surfaces of the pair of fourth surfaces and spaced apart from each other; and a sixth surface disposed spaced apart from surfaces of the pair of fifth surfaces and configured to connect the fifth surface to the bottom surface.

The first surface, the pair of third surfaces, and the pair of fifth surfaces of the notch may be parallel to the top surface and the bottom surface, and the pair of second surfaces of each of the base plate, the connection part, and the terminal part, the pair of fourth surfaces, and the pair of sixth surfaces may be provided to be inclined.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a perspective view of a secondary battery according to some embodiments;
FIG. 2 is a cross-sectional view of the secondary battery according to some embodiments;
FIGS. 3A and 3B are rear views of a cap-up of the secondary battery provided with a notch in a base plate according to some embodiments;
FIG. 4 is a cross-sectional view of a cap assembly of the secondary battery of FIG. 2 according to some embodiments;
FIGS. 5A and 5B are enlarged cross-sectional views of a portion '5' provided in the cap-up of FIG. 4 according to some embodiments;
FIG. 6 is a rear view of the cap-up provided with the notch in a base plate according to various embodiments of the present disclosure;
FIGS. 7A to 7D are rear views of the cap-up of a secondary battery provided with a notch in a terminal part according to various embodiments of the present disclosure;
FIG. 8 is a cross-sectional view of a cap assembly of the secondary battery according to some embodiments;
FIG. 9 is a rear view of a cap-up of a secondary battery provided with a notch in a connection part according to various embodiments of the present disclosure;
FIG. 10 is a cross-sectional view of a cap assembly of a secondary battery according to some embodiments; and
FIG. 11 is a rear view of a cap-up of a secondary battery provided with a notch according to various embodiments of the present disclosure.

### DETAILED DESCRIPTION

Hereinafter, some embodiments of the present disclosure will be described below in more detail with reference to the accompanying drawings. The terms used in the following description and claims are not limited to their dictionary meanings, but are merely used to enable a clear and consistent understanding of the invention. Accordingly, it should be apparent to those skilled in the art that the following description of embodiments of the present invention is provided for illustration purpose only and not for the purpose of limiting the invention as defined by the appended claims and their equivalents. Thus, because the embodiments described in this specification and the configurations shown in the drawings are only one most preferred embodiment of the present invention and do not represent all of the technical ideas of the present invention, it should be understood that there may be various equivalents and modifications that can be substituted for them at the time of this application.

Also, the expressions "comprise/include" and/or "comprising/including" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

In addition, the shapes and the sizes of elements in accompanying drawings will be exaggerated for more apparent description. In addition, the same reference numbers may be assigned to the same components in different embodiments.

The reference to two objects of comparison being 'the same' means 'substantially the same'. Therefore, substantially identical may include a deviation that is considered to a low level in the art, for example, a deviation of less than 5%. In addition, uniformity of a parameter on a certain area may mean uniformity from an average perspective.

It will be understood that although the terms of first and second are used herein to describe various elements, these elements should not be limited by these terms. These terms are only used to distinguish one component from another component, and unless specifically stated to the contrary, the first component may also be a second component.

Throughout this specification, unless specifically referred to the contrary, each component may be singular or plural.

An arrangement of any component on an upper portion (or lower portion) of a component or on a top (or bottom) of a component means that any component is placed in contact with a top surface (or bottom surface of the component, as well as other elements are interposed between the element and any element disposed above (or below) the element.

In addition, if a component is described as being linked, coupled, or connected to another component, it should be understood that the above components may be directly connected or connected to each other, but other components may be "interposed" between each component, or each component may be linked, coupled, or connected through another component. Also, in this specification below, if any portion is referred to as being "electrically connected" to another portion, it should be understood that the former may be "directly connected" to the latter, or "connected" to the latter via an intervening member.

If referring to "A and/or B" throughout the specification, this means A, B or A and B, unless specifically stated to the contrary. That is, "and/or" includes all or any combination of the plurality of listed items. If referring to "C to D", this means not less than C and not more than D, unless otherwise specified.

The terms used in this specification are for describing embodiments of the present disclosure and are not intended to limit the disclosure.

In some embodiments of the cylindrical-type battery according to an embodiment of the present disclosure, one of the cylindrical-type batteries is selected, and the selected battery is described as having a general structure, and for commonly applied technologies, describe the general structure of cylindrical-type cells.

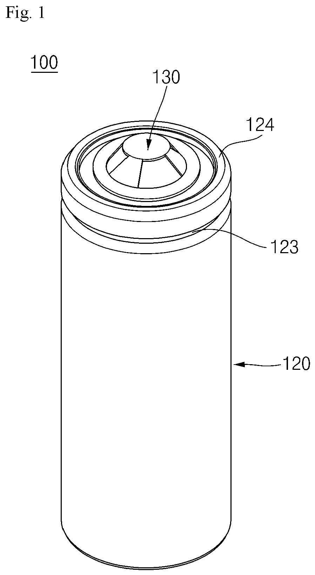

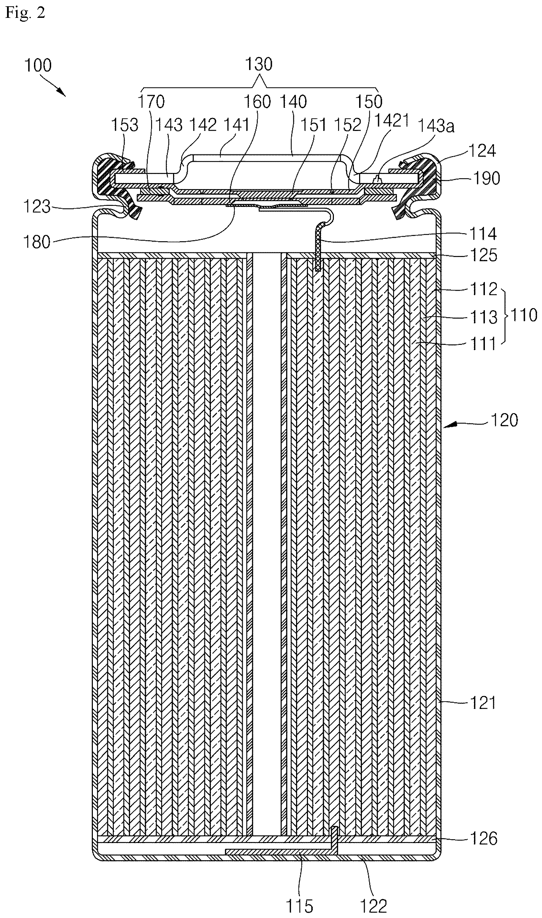

FIG. 1 is a perspective view of a secondary battery according to some embodiments. FIG. 2 is a cross-sectional view of the secondary battery according to some embodiments.

As illustrated in FIGS. 1 and 2, a secondary battery 100 may include an electrode assembly 110, a can 120 accommodating the electrode assembly 110 and an electrolyte therein, a cap assembly 130 coupled to an opening of the can 120 to seal the can 120, and a first insulating plate 125 disposed between the electrode assembly 110 and the cap assembly 130 inside the can 120. In some embodiments, the secondary battery 100 may include a gasket 190 that insulates the cap assembly 130 from a body part 121 that is a side portion of the can 120.

The electrode assembly 110 may include a separator 113 and first and second electrodes 111 112 disposed with the separator 113 therebetween and be wound in a jelly-roll shape.

The first electrode 111 may include a first base material and a first active material layer disposed on the first base material. A first lead tab 114 may extend outward from a first non-coating portion, on which the first active material layer is not disposed in the first base material, and the first lead tab 114 may be electrically connected to the cap assembly 130.

The second electrode 112 may include a second base material and a second active material layer disposed on the second base material. The second lead tab 115 may extend outward from a second non-coating portion of the second base material, on which the second active material layer is not disposed, and the second lead tab 115 may be electrically connected to the can 120. The first lead tab 114 and the second lead tab 115 may extend in opposite directions.

The first electrode 111 may function as a positive electrode. In some embodiments, the first base material may be made of, for example, aluminum foil, and the first active material layer may include, for example, transition metal oxide. The second electrode 112 may function as a negative electrode. In some embodiments, the second base material may be made of, for example, copper foil or nickel foil, and the second active material layer may include, for example, graphite.

The separator 113 may function to prevent short circuit between the first electrode 111 and the second electrode 112 while allowing movement of lithium ions. The separator 113 may be made of, for example, a polyethylene film, a polypropylene film, a polyethylene-polypropylene film, etc.

The can 120 may accommodate the electrode assembly 110 and the electrolyte and may define an outer appearance of the secondary battery 100 together with the cap assembly 130. The can 120 may include an about cylindrical body part 121 and a bottom part 122 connected to one side of the body part 121. A beading part 123 that is deformed inward may be disposed on the body part 121, and a crimping part 124 bent inward may be disposed on an opening-side end of the body part 121.

The beading part 123 may prevent the electrode assembly 110 from moving inside the can 120 to facilitate seating of the gasket 190 and the cap assembly 130. The crimping part 124 may firmly fix the cap assembly 130 by pressing an edge of the cap assembly 130 through the gasket 190. The can 120 may be made of iron plated with, for example, nickel.

The first insulating plate 125 may be disposed under the beading part 123 so as to be in contact with the electrode assembly 110, and a tab opening through which the first lead tab 114 is withdrawn may be provided in the first insulating plate 125. The cap assembly 130, which is electrically connected to the first electrode 111 by the first lead tab 114, faces the electrode assembly 110 with the first insulating plate 125 therebetween, and an insulated state with the second electrode 112 may be maintained by the first insulating plate 125.

The first insulating plate 125 may serve to prevent the electrode assembly 110 from electrically contacting the cap assembly 130. In some embodiments, the first insulating plate 125 may serve to prevent the second electrode 112 of the electrode assembly 110 from being in electrical contact with the cap assembly 130. In some embodiments, the plurality of holes such as the tab opening may serve to allow a gas to quickly move to the cap assembly 130 if a large amount of gas is generated due to abnormality in the secondary battery 100. In some embodiments, a plurality of holes may serve to allow the electrolyte to quickly flow into the electrode assembly 110 in a process of injecting the electrolyte.

The second lead tab 115 of the electrode assembly 110 may be welded to the bottom part 122 of the can 120. In some embodiments, the can 120 may operate as the second electrode 112. In other embodiments, the first lead tab 114 may be welded to the bottom part 122 of the can 120. In some embodiments, the can 120 may operate as the first electrode 111.

In some embodiments, a second insulating plate 126 which is coupled to the can 120 and in which holes are defined at a center and outside thereof may be disposed between the electrode assembly 110 and the bottom part 122. The second insulating plate 126 may serve to prevent the electrode assembly 110 from being in electrical contact with the bottom part 122 of the can 120. In some embodiments, the first insulating plate 126 may serve to prevent the first electrode 111 of the electrode assembly 110 from being in electrical contact with the bottom part 122.

The cap assembly 130 may be fixed to the inside of the crimping part 124 through the gasket 190 to seal the can 120. The cap assembly 130 may include a cap-up 140, a safety plate 150, a cap-down 160, an insulating member 170, and a sub plate 180, but is not limited thereto and be variously modified.

The cap-up 140 may be disposed at the uppermost side of the cap assembly 130. The cap-up 140 may include a terminal part 141 that protrudes convexly upward and is connected to an external circuit, and an outlet for discharging a gas may be disposed around the terminal part 141.

The cap-up 140 may include a terminal part 141, a connection part 142, and a base plate 143. In some embodiments, at least one of the terminal part 141, the connection part 142, and the base plate 143 of the cap-up 140 may be provided with one or more notches 143a, 241a, 342a, 441a, and 441b provided to be ruptured at a set pressure.

The terminal part 141 may protrude convexly upward and be connected to the external circuit and may be provided with an outlet for discharging a gas around the terminal part 141. In some embodiments, the outlet may be a through-hole 1421 of the connection part 142.

The base plate 143 may be flat, and the notch 143a may be provided in the base plate 143. The connection part 142 may connect the terminal part 141 to the base plate 143.

The cap-up 140 may be made of steel and/or stainless steel, and nickel plating may be provided on a surface of the cap-up 140. In some embodiments, nickel may be plated on the cap-up 140 to prevent the cap-up 140 from corroding, and an electrode tab (not shown) of an external device may be easily welded to the cap-up 140.

A specific structure of the cap-up 140 and a structure of the notch according to various embodiments will be described herein.

The safety plate 150 may be disposed below cap-up 140. The safety plate 150 may include a protrusion 151 that protrudes convexly downward and is connected to the sub plate 180, and at least one safety vent 152 disposed around the protrusion 151. This safety vent 152 may be a notch. In some embodiments, the safety plate 150 may include a curling part 153 coupled to the base plate 143 in a form that surrounds an edge of the base plate 143 of the cap-up 140. The curling part 153 may be disposed along the end of the safety plate 150.

If a gas is generated due to an overcharging or abnormal operation of the secondary battery 100, the protrusion 151 may be deformed upward by a pressure and may be separated from the sub plate 180, and the safety plate 150 may be cut along the safety vent 152. The cut safety plate 150 may prevent explosion of the secondary battery 100 by discharging the gas to the outside.

The cap-down 160 may be disposed below the safety plate 150. An opening for exposing the protrusion 151 of the safety plate 150 and an opening for discharging the gas may be defined in the cap-down 160. The insulating member 170 may be disposed between the safety plate 150 and the cap-down 160 to insulate the safety plate 150 and the cap-down 160 from each other.

The sub plate 180 may be disposed under the cap-up 160. The sub plate 180 may be fixed to a bottom surface of the cap-down 160. Although not specifically shown in the drawings, in some embodiments, the protrusion 151 of the safety plate 150 may be fixed to the sub plate 180. The first lead tab 114 withdrawn from the electrode assembly 110 may be fixed to the sub plate 180. In some embodiments, the cap-up 140, the safety plate 150, the cap-down 160, and the sub plate 180 may be electrically connected to the first electrode 111 of the electrode assembly 110.

The gasket 190 may be installed on an upper portion of the can 120. In some embodiments, the gasket 190 may be pressed between an outer circumference of the safety plate 150 and the beading part 123 and the crimping part 124 of the can 120. This gasket 190 may insulate the can 120 from the cap assembly 130 and prevent the cap assembly 130 from being separated from the can 120.

However, the present disclosure is not limited thereto, and the can 120 may be provided in various shapes such as a prismatic shape or a pouch shape. In some embodiments, the can 120 may be made of a metal such as aluminum, aluminum alloy, or nickel-plated steel, or a laminated film or plastic that constitutes the pouch.

In some embodiments, a compound capable of reversible intercalation and deintercalation of lithium (lithiated intercalation compound) may be used as the positive electrode active material. In some embodiments, one or more types of complex oxides of lithium and a metal selected from cobalt, manganese, nickel, and a combination thereof may be used.

The complex oxides may be lithium transition metal complex oxide, and specific examples may include lithium nickel-based oxide, lithium cobalt-based oxide, lithium manganese-based oxide, lithium iron phosphate-based compound, cobalt-free nickel-manganese-based oxide, or a combination thereof.

For example, a compound represented by any one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above-described chemical formulas, A may be Ni, Co, Mn, or a combination thereof; X may be Al, Ni, Co, Mn, Cr, Fe, Mg, Sr, V, a rare earth element, or a combination thereof; D may be O, F, S, P, or a combination thereof; G may be Al, Cr, Mn, Fe, Mg, La, Ce, Sr, V, or a combination thereof; and L¹ may be Mn, Al, or a combination thereof.

The positive electrode for the lithium secondary battery may include a current collector and a positive electrode active material layer disposed on the current collector. The positive electrode active material layer may include a positive electrode active material and may further include a binder and/or a conductive material.

A content of the positive electrode active material may be about 90% to about 99.5% by weight based on 100% by weight of the positive electrode active material layer, and a content of each of the binder and the conductive material may be about 0.5% to 5% by weight based on 100% by weight of the positive electrode active material layer.

Al may be used as the current collector, but is not limited thereto.

In some embodiments, the negative active material may include a material capable of reversibly intercalating/deintercalating lithium ions, a lithium metal, an alloy of the lithium metal, a material capable of doping and dedoping lithium, or transition metal oxide.

The material capable of reversibly intercalating/deintercalating lithium ions may be a carbon-based negative electrode active material and may include, for example, crystalline carbon, amorphous carbon, or a combination thereof. Examples of the crystalline carbon may include graphite such as natural graphite or artificial graphite, and examples of the amorphous carbon may include soft carbon or hard carbon, mesophase pitch carbide, calcined coke, etc.

A Si-based negative electrode active material or an Sn-based negative electrode active material may be used as the material capable of doping and dedoping lithium. The Si-based negative electrode active material may be silicon, silicon-carbon composite, SiOₓ (0 < x < 2), an Si-based alloy, or a combination thereof.

The silicon-carbon composite may be a composite of silicon and amorphous carbon. According to some embodiments, the silicon-carbon composite may be in the form of silicon particles and amorphous carbon coated on a surface of each silicon particle.

The silicon-carbon composite may further include crystalline carbon. For example, the silicon-carbon composite may include a core containing crystalline carbon and silicon particles and an amorphous carbon coating layer disposed on a surface of the core.

The negative electrode for the lithium secondary battery may include a current collector and a negative electrode active material layer disposed on the current collector. The negative electrode active material layer includes a negative electrode active material and may further include a binder and/or a conductive material.

For example, the negative electrode active material layer may include about 90% to about 99% by weight of the negative electrode active material, about 0.5% to about 5% by weight of the binder, and about 0% to about 5% by weight of the conductive material.

The binder may be a non-aqueous binder, an aqueous binder, a dry binder, or a combination thereof. if the aqueous binder is used as the negative electrode binder, the negative electrode binder may further include a cellulose-based compound capable of imparting viscosity.

The negative electrode current collector may be selected from copper foil, nickel foil, stainless steel foil, titanium foil, nickel foam, copper foam, a polymer base material coated with a conductive metal, and a combination thereof.

The electrolyte for the lithium secondary battery may include a non-aqueous organic solvent and lithium salt.

The non-aqueous organic solvent may serve as a medium through which ions involved in the electrochemical reaction of the battery moves.

The non-aqueous organic solvent may be a carbonate-based, ester-based, ether-based, ketone-based, or alcohol-based solvent, an aprotic solvent, or a combination thereof and may be used alone or in a mixture of two or more types.

In some embodiments, if using the carbonate-based solvent, a mixture of cyclic carbonate and chain carbonate may be used.

Depending on the type of the lithium secondary battery, the separator may exist between the positive and negative electrodes. As such a separator, polyethylene, polypropylene, polyvinylidene fluoride, or a multilayer film of two or more layers thereof may be used.

The separator may include a porous base material and a coating layer containing an organic material, an inorganic material, or a combination thereof disposed on one or both sides of the porous base material.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combinations thereof, but is not limited thereto.

The organic material and the inorganic material may be mixed in one coating layer or may exist in a laminated form of the coating layer containing the organic material and the coating layer containing the inorganic material.

Hereinafter, the cap-ups 140, 240, 340, and 440 in which the notches 143a, 241a, 342a, 441a and 441b are provided to provide a secondary battery that is advantageous in terms of stability by affecting gas emission with a similar function to the safety plate 150 will be described in detail.

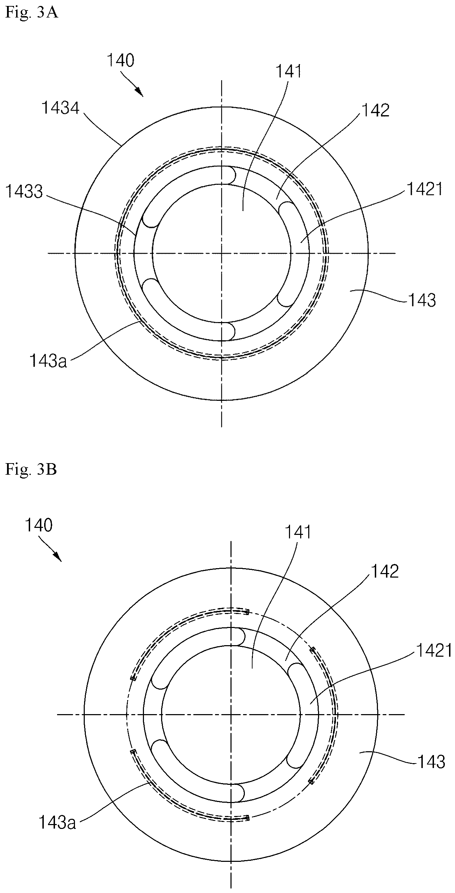

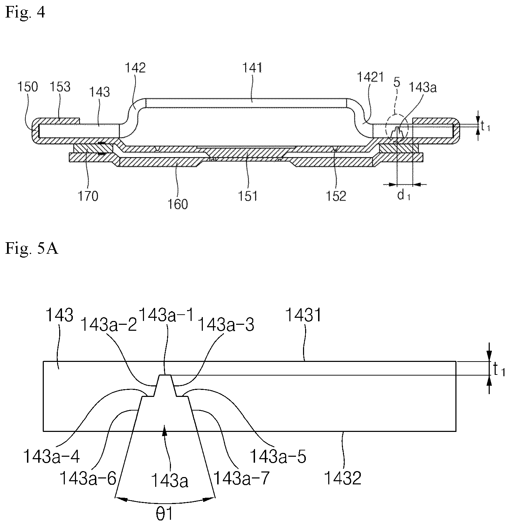

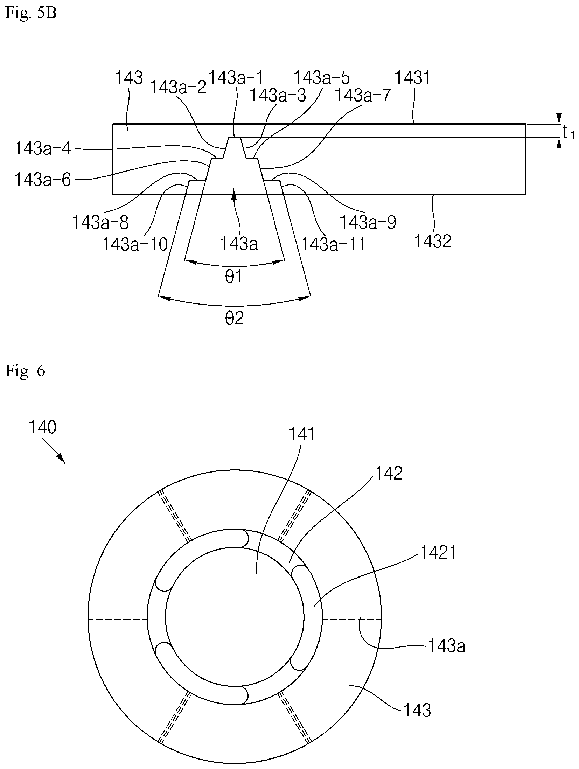

FIGS. 3A and 3B are rear views of the cap-up 140 of the secondary battery 100 provided with the notch 143a in the base plate 143 according to some embodiments. FIG. 4 is a cross-sectional view of the cap assembly 130 of the secondary battery 100 of FIG. 2 according to some embodiments. FIGS. 5A and 5B are enlarged cross-sectional views of a portion (see a portion '5', for example) provided with the notch 143a provided in the cap-up of FIG. 4, according to some embodiments. FIG. 6 is a rear view of the cap-up 140 provided with the notch 143a in the base plate according to various embodiments of the present disclosure.

First, referring to FIGS. 3A to 6, the cap-up 140 in which the base plate 143 is provided with the notch 143a will be described.

The base plate 143 may be disposed on the outer circumference of the cap-up 140 and may include a substantially flat top surface 1431 and a bottom surface 1432. In some embodiments, the base plate 143 may include an inner circumferential surface 1433 and an outer circumferential surface 1434 connecting the top surface 1431 to the bottom surface 1432. The inner circumferential surface 1433 may be a surface connected to the connection part 142, and the outer circumferential surface 1434 may be the outer-most surface of the cap-up 140. The inner circumferential surface 1433 and the outer circumferential surface 1434 may be circular shapes having the same center, and the base plate 143 may be provided in a donut shape along the inner circumferential surface 1433 and the outer circumferential surface 1434. The base plate 143 may be electrically connected to the safety plate 150. In some embodiments, a gasket 190 may be disposed on an outer circumference of the base plate 143.

The terminal part 141 may be provided to protrude from the base plate 143 and may be provided to be flat. In some embodiments, the terminal part 141 may be disposed at the center of the cap-up 140 and may be provided to be stepped from the base plate 143. The terminal part 141 may be electrically connected to the first lead tab 114 of the electrode assembly 110 to ultimately operate as the first electrode 111. The terminal part 141 may serve as a terminal directly connected to the electrode tab of an external device.

The connection part 142 may connect the base plate 143 to the terminal part 141. In the connection part 142, a circumference of an upper portion thereof connected to the terminal part 141 may be less than that of a lower portion thereof connected to the base plate 143. In some embodiments, the connection part 142 may be provided to be inclined. In some embodiments, a through-hole 1421 through which a gas generated inside the can 120 is discharged may be defined in the connection part 142. The through-hole 1421 may be defined in a plurality of through-holes, but the number of through-holes is not limited in the present disclosure.

FIGS. 3A and 3B illustrate the bottom surface 1432 of the base plate 143, and the notch 143a may be disposed on the bottom surface 1432 of the base plate 143. In some embodiments, the notch 143a may have a multi-stage trench shape having a constant depth. However, in some embodiments, the notch 143a may be disposed on the top surface 1431 of the base plate 143.

The notch 143a may be provided in a substantially circular ring shape along a circumference of the bottom surface 1432 of the base plate 143 (see FIG. 3A, for example). In some embodiments, the notches 143a may be disposed to be spaced at a regular interval from each other along the circumference of the base plate 143 (see FIG. 3B, for example).

The notch 143a may be disposed between the inner circumferential surface 1433 and the outer circumferential surface 1434 of the base plate 143. For example, referring to FIG. 4, the notch 143a may be disposed at a position of about 0.5 mm to about 0.7 mm from an end of the curling part 153 of the safety plate 150. In some embodiments, a distance d1 between the center of the notch 143a and the end of the curling part 153 may be about 0.5 mm to about 0.7 mm. In some embodiments, if the distance d₁ between the center of the notch 143a and the end of the curling part 153 is less than about 0.5 mm or more than about 0.7 mm, the notch 143a may not be ruptured, and only deformation such as rising may occur.

Referring to FIG. 4, a thickness t₁ of a portion of the cap-up 140 at which the notch 143a is provided may be less than about 0.34 times (e.g., 1/3 times) the thickness of the cap-up 140. For example, if the thickness of the cap-up 140 is about 0.6 mm, the thickness t₁ of the portion of the cap-up 140 at which the notch 143a is provided may be about 0.05 mm to about 0.20 mm. In some embodiments, if the thickness t₁ of the portion at which the notch 143a is provided is less than about 0.05 mm, the notch 143a may be ruptured before a desired rupture pressure is set. In addition, if the thickness t₁ of the portion at which the notch 143a is provided is about 0.20 mm or more, the notch 143a may not be ruptured even at the set rupture pressure, and only deformation such as the rising occurs, or the cap-up 140 may be deformed.

Referring to FIGS. 5A and 5B, a depth of the notch 143a may be determined by a height between the bottom surface 1432 of the base plate 143 and the first surface 143a-1. For example, the depth of the notch 143a may be about 80% to about 90% of a height between the top surface 1431 and the bottom surface 1432 of the base plate 143. Here, if the depth of the notch 143a is greater than about 90% of the height between the top surface 1431 and the bottom surface 1432 of the base plate 143, the notch 143a may be ruptured at a relatively low internal battery pressure. In some embodiments, if the depth of the notch 143a is greater than about 90% of the height between the top surface 1431 and the bottom surface 1432 of the base plate 143, there is a risk that the notch 143a is cracked even with a relatively small external impact. In some embodiments, if the depth of the notch 143a is less than about 80% of the height between the top surface 1431 and the bottom surface 1432 of the base plate 143, the notch 143a may not be ruptured even at a relatively large internal battery pressure.

As described above, the deeper the depth of the notch 143a, the lower the internal pressure required to rupture the notch, and the shallower the depth of the notch 143a, the higher the pressure required to rupture the notch 143a. In some embodiments, if the depth of the notch 143a (the height of the first surface 143a-1 from the bottom surface 1432 of the base plate 143) is adjusted, the rupture pressure of the cap-up 140 may be adjusted. Here, the depth of the notch 143a may be a value obtained by subtracting the thickness t1 of the cap-up 140 at the portion at which the notch 143a is provided from the total thickness of the cap-up 140.

Referring to FIG. 5A, the notch 143a is described in more detail, and the notch 143a may include a first surface 143a-1 disposed between the top surface 1431 and the bottom surface 1432 of the base plate 143, and a pair of second surfaces 143a-2 and 143a-3 disposed on both surfaces of the first surface 143a-1 so as to be spaced apart from each other. In some embodiments, the notch 143a may include a pair of third surfaces 143a-4 and 143a-5 disposed on both surfaces of each of the pair of second surfaces 143a-2 and 143a-3 so as to be spaced apart from each other. In some embodiments, the notch 143a may include a pair of fourth surfaces 143a-6 and 143-7, which are spaced apart from each other, disposed on both the surfaces of each of the pair of third surfaces 143a-4 and 143a-5, and connected to the bottom surface 1432 of the base plate 143. Here, the first surface 143a-1 and the pair of third surfaces 143a-4 and 143a-5 may be provided to be substantially parallel to the top surface 1431 and the bottom surface 1432 of the base plate 143.

In some embodiments, an angle θ1 between the pair of fourth surfaces 143a-6 and 143a-7 may be about 35° to about 80°. If the angle θ1 between the pair of fourth surfaces 143a-6 and 143a-7 is greater than about 80°, the notch 143a may be ruptured at a relatively low internal pressure. In some embodiments, if the angle θ1 of the pair of fourth surfaces 143a-6 and 143a-7 is greater than about 80°, there may be a risk that the notch 143a is cracked even by a relatively small external impact. In some embodiments, if the angle θ1 between the pair of fourth surfaces 143a-6 and 143a-7 is less than about 35°, the notch 143a may not be ruptured even at a relatively high internal pressure.

In some embodiments, as the angle θ1 between the pair of fourth surfaces 143a-6 and 143a-7 increases, the internal pressure at which notch 143a may be ruptured decreases, and as the angle θ1 between the pair of fourth surfaces 143a-6 and 143a-7 decreases, the internal pressure at which the notch 143a may be ruptured increases. In some embodiments, if the angle θ1 of the pair of fourth surfaces 143a-6 and 143a-7 is adjusted, the rupture pressure of the cap-up 140 may be adjusted.

In some embodiments, referring to FIG. 5B, the notch 143a may include a pair of fifth surfaces 143a-8 and 143a-9, which are disposed on both surfaces of each of the pair of fourth surfaces 143a-6 and 143a-7 and spaced apart from each other. In some embodiments, the notch 143a may include a pair of sixth surfaces 143a-10 and 143a-1 1, which are disposed on both surfaces of each of the pair of fifth surfaces 143a-8 and 143a-9 and connected to the bottom surface 1432 of the base plate 143 so as to be spaced apart from each other. Here, the first surface 143a-1, the pair of third surfaces 143a -4 and 143a-5, and the pair of fifth surfaces 143a-8 and 143a-9 may be provided to be substantially parallel to the top surface 1431 and the bottom surface 1432 of the base plate 143.

An angle θ2 of the pair of sixth surfaces 143a-10 and 143a-1 1 may be about 35° to about 80°. If the angle θ2 between the pair of sixth surfaces 143a-10 and 143a-1 1 is greater than about 80°, the notch 143a may be ruptured at a relatively low internal pressure. In some embodiments, if the angle θ2 of the pair of sixth surfaces 143a-10 and 143a-1 1 is greater than about 80°, there may be a risk that the notch 143a is cracked even by a relatively small external impact. In some embodiments, if the angle θ2 between the pair of sixth surfaces 143a-10 and 143a-11 is less than about 35°, the notch 143a may not be ruptured at a relatively high internal pressure.

In some embodiments, as the angle θ2 between the pair of sixth surfaces 143a-10 and 143a-11 increases, the internal pressure at which notch 143a may be ruptured decreases, and as the angle θ2 between the pair of sixth surfaces 143a-10 and 143a-11 decreases, the internal pressure at which the notch 143a may be ruptured increases. In some embodiments, if the angle θ2 of the pair of sixth surfaces 143a-10 and 143a-1 1 is adjusted, the rupture pressure of the cap-up 140 may be adjusted.

In some embodiments, the notch 143a may be provided in multiple stages such as double (see FIG. 5A, for example) or triple (see FIG. 5B, for example).

Referring to FIG. 6, the notch 143a may be provided in a straight line radiated outward from the inside of the base plate 143. In some embodiments, the notch 143a may be provided in a straight line radiated from the inner circumferential surface 1433 of the base plate 143 toward the outer circumferential surface 1434. The straight line-shaped notches 143a may be provided at regular intervals along the circumference of the base plate 143. In some embodiments, the straight line-shaped notch 143a may be provided from the inner circumferential surface 1433 to a position at which the curling part 153 is coupled.

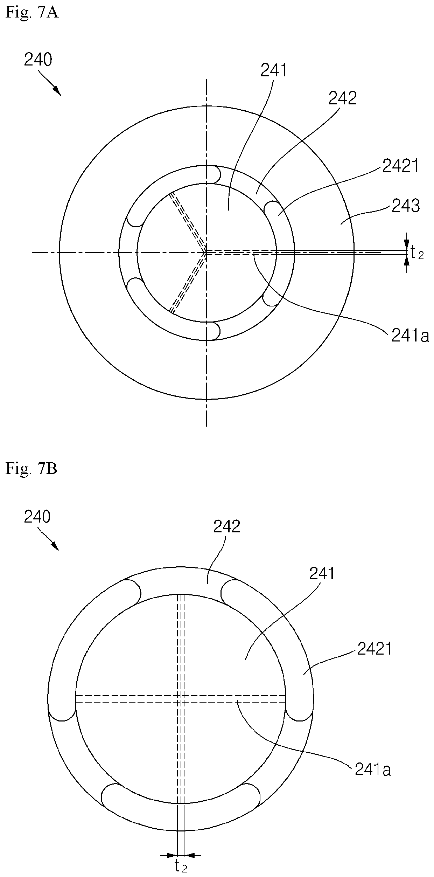

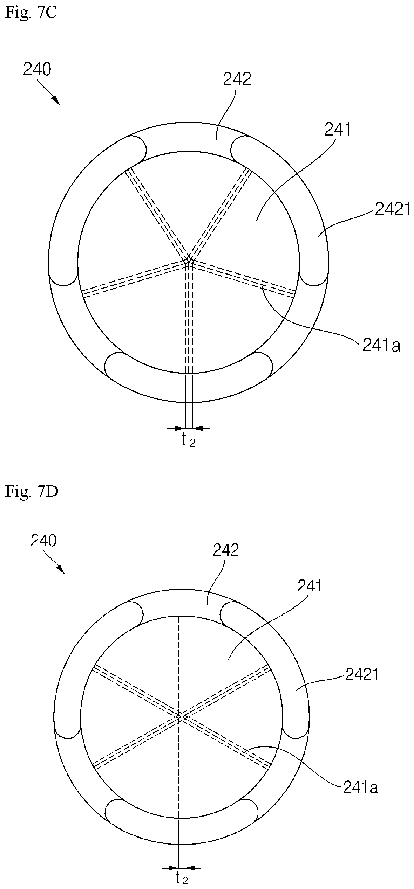

In some embodiments, the notch 143a may be provided in the terminal part 141 or the connection part 142 of the cap-up 140. In some embodiments, it will be described that the notch 143a is provided in the terminal part 141 or the connection part 142 of the cap-up 140 with reference to FIGS. 7A to 11.

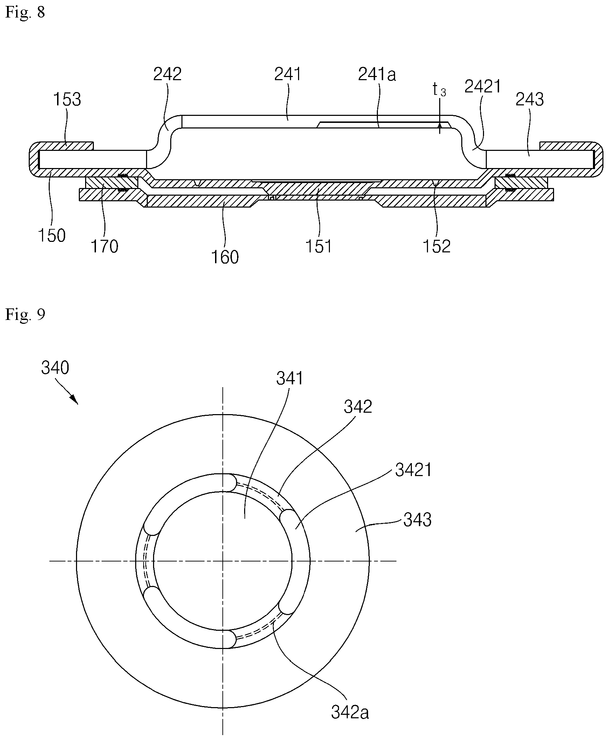

FIGS. 7A to 7D are rear views the cap-up 240 of the secondary battery 100 provided with the notch 241a in the terminal part 241 according to various embodiments of the present disclosure. FIG. 8 is a cross-sectional view of the cap assembly 130 of the secondary battery 100 according to some embodiments.

Referring to FIGS. 7A to 8, the terminal part 241 may be provided in a circular shape on a plane, and the notch 241a may be provided in the terminal part 241. In some embodiments, the notch 241a may be provided to be branched into at least three pieces from the center of the terminal part 241. In some embodiments, the notch 241a may be provided in a shape in which at least two or more straight lines are intersected with respect to the center of the terminal part 241. Here, a width t₂ of the notch 241a provided in the bottom surface may be about 0.05 mm to about 0.20 mm. That is, the width t₂ of the notch 241a provided in the bottom surface may be equal to a thickness t₃ of a portion of the cap-up 240 in which the notch 241a is formed, but is not limited thereto.

In the illustrated embodiments, the cap-up 240 further includes connection part 242 and base plate 243.

In some embodiments, the thickness t₃ of a portion of the cap-up 240 at which the notch 241a is provided may be less than about 0.34 times (e.g., 1/3 times) the thickness of the cap-up 240. For example, if the thickness of the cap-up 240 is about 0.6 mm, the thickness t₃ of the portion of the cap-up 240 at which the notch 241a is provided may be about 0.05 mm to about 0.20 mm. A structure of the notch 241a may be the same as that of the notch 143a provided in the base plate 143, and thus, description thereof will be omitted (see FIGS. 5A and 5B, for example). In some embodiments, because an electrode tab of an external device is welded to the terminal part 241, the notch 241a may be provided in a position at which the electrode tab of the external device is not welded.

As described above, the notch 241a may be provided in a bottom surface of the terminal part 241, but is not limited thereto. For example, the notch 241a may be provided in a top surface of the terminal part 241.

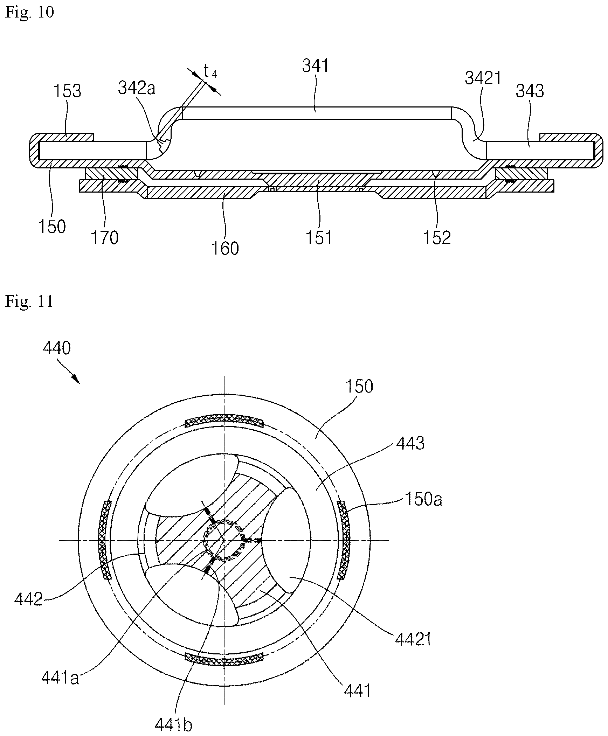

FIG. 9 is a rear view of the cap-up 340 of the secondary battery 100 provided with the notch 342a in the connection part 342 according to various embodiments of the present disclosure. FIG. 10 is a cross-sectional view of the cap assembly 130 of the secondary battery 100 according to some embodiments.

Referring to FIGS. 9 and 10, the notch 342a may be provided along the circumference of the connection part 342 on at least one surface of the connection part 342. In some embodiments, the thickness t₄ of a portion of the cap-up 340 at which the notch 342a is provided may be less than about 0.34 times (e.g., 1/3 times) the thickness of the cap-up 340. For example, if the thickness of the cap-up 340 is about 0.6 mm, the thickness t₄ of the portion of the cap-up 340 at which the notch 342a is provided may be about 0.05 mm to about 0.20 mm. A structure of the notch 342a may be the same as that of the notch 143a provided in the base plate 143, and thus, description thereof will be omitted (see FIGS. 5A and 5B, for example). In some embodiments, because the cap-up 340 provides the terminal part 341 and the connection part 342 by pressing a flat main plate through a jig, if the notch 342a is provided in advance at the portion that will become the connection part 342, there may be a risk that the notch 342a is ruptured by being pressed through the jig. In some embodiments, the terminal part 341 and the connection part 342 may be provided by pressing the main plate through the jig, and then, the notch 342a may be provided in the connection part 342.

In the illustrated embodiments, the cap-up 340 further includes base plate 343.

As described above, the notch 342a may be provided in a bottom surface of the connection part 342, but is not limited thereto. For example, the notch 342a may be provided in a top surface of the connection part 342.

FIG. 11 is a rear view of the cap-up 440 of the secondary battery 100 provided with the notches 441a and 441b according to various embodiments of the present disclosure.

Referring to FIG. 11, the notch 441a may have a circular ring shape disposed along the circumference of the terminal part 441. In addition, in some embodiments, the notch 441b may be provided in a straight shape radiated outward from the inside of the terminal part 441, and the straight line-shaped notches 441b may be provided at regular intervals along the circumference of the terminal part 441. In some embodiments, both types of notches 441a and 441b may be applied to the terminal part 441.

In the illustrated embodiments, the cap-up 440 further includes connection part 442 and base plate 443.

The above-described notches 143a, 241a, 342a, 441a, and 441b may be ruptured if the internal pressure of the can 120 increases abnormally to discharge an internal gas. If the notches 143a, 241a, 342a, 441a, and 441b are ruptured, the terminal part 141 and the connection part 142 of the cap-up 140 may be separated to the outside. In some embodiments, if the notches 143a, 241a, 342a, 441a, and 441b are ruptured, the terminal part 141 and the connection part 142 may be separated from the cap-up 140. In some embodiments, a portion of the base plate 143 provided inside the notch 143a may also be separated from the cap-up 140. Therefore, the notches 143a, 241a, 342a, 441a, and 441b according to the present disclosure may quickly discharge the internal gas to rapidly reduce an internal temperature.

In some embodiments, as described above, the secondary battery may include the safety plate that blocks current and is ruptured if the internal pressure of the can abnormally increases, and the cap-up having the through-hole through which the internal gas is discharged. If the internal pressure of the can increases abnormally, the internal temperature may rise rapidly to the point that the safety plate is melted. As a result, if the safety plate is ruptured, fragments may be melted to block the through-hole of the cap-up, and thus, it may be difficult to discharge the internal gas. However, the secondary battery 100 according to the present disclosure may include one of more of the notches 143a, 241a, 342a, 441a, and 441b provided in at least one of the terminal part, the connection part, and the base plate of the cap-up, and thus, the notches may be ruptured if the internal pressure of the can 120 increases abnormally to separate the terminal part and the connection part to the outside, thereby quickly discharging the internal gas. Therefore, the secondary battery 100 according to the present disclosure may prevent the risk in which the ruptured safety plate 150 blocks the through-holes 1421, 2421, 3421 and 4421.

According to the embodiments of the present disclosure, a groove may be provided in the cap-up so that the cap-up is ruptured if the safety vent operates, and thus, the gas inside the can may be easily discharged to improve the stability of the battery itself and prevent chain rupture or explosion from occurring.

According to the embodiments of the present disclosure, the multi-stage trench-shaped notch provided in the cap-up may be provided to easily discharge the gas generated in the can, rapidly reduce the internal temperature of the can, and control the rupture pressure of the cap-up.

However, the aspects and features of the present disclosure are not limited to those described above, and other aspects and features not expressly described herein will be clearly understood by a person skilled in the art from the description of example embodiments of the present disclosure described below.

## Claims

1. A secondary battery comprising:
an electrode assembly (110);
a can (120) configured to accommodate the electrode assembly (110); and
a cap assembly (130) configured to seal an upper portion of the can (120) and provided with a cap-up (140, 240, 340, 440),
wherein the cap-up (140, 240, 340, 440) comprises:
a base plate (143, 243);
a terminal part (141, 241, 341, 441) protruding upwardly from an upper side of the base plate (143, 243) and disposed at a center of the cap-up (140, 240, 340, 440); and
a connection part (142, 342) configured to connect the base plate (143, 243) to the terminal part (141, 241, 341, 441),
wherein a notch (143a, 241a, 342a, 441a, 441b) is provided in at least one of the base plate (143, 243), the terminal part (141, 241, 341, 441), and the connection part (142, 342) so as to be ruptured at a set pressure within the can (120).

2. The secondary battery as claimed in claim 1, wherein the notch (143a, 241a, 342a, 441a, 441b) is provided in a multi-stage trench shape.

3. The secondary battery as claimed in claim 1, wherein the base plate (143, 243) is provided in a planar circular shape, and
the notch (143a, 241a, 342a, 441a, 441b) is provided in the base plate (143, 243).

4. The secondary battery as claimed in claim 3, wherein the notch (143a, 241a, 342a, 441a, 441b) has a circular ring shape disposed along a circumference of the base plate (143, 243).

5. The secondary battery as claimed in claim 3, wherein the notch (143a, 241a, 342a, 441a, 441b) comprises a plurality of notches (143a, 241a, 342a, 441a, 441b) spaced at a regular internal from each other along a circumference of the base plate (143, 243).

6. The secondary battery as claimed in claim 3, wherein the notch (143a, 241a, 342a, 441a, 441b) comprises a plurality of notches (143a, 241a, 342a, 441a, 441b) provided in straight line-shapes radiating outward from an inside of the base plate (143, 243), and
the plurality of notches (143a, 241a, 342a, 441a, 441b) are provided at regular intervals along a circumference of the base plate (143, 243).

7. The secondary battery as claimed in claim 1, wherein the notch (143a, 241a, 342a, 441a, 441b) is disposed along a circumference of the connection part (142, 342) on at least one surface of the connection part (142, 342).

8. The secondary battery as claimed in claim 1, wherein the terminal part (141, 241, 341, 441) is provided in a planar circular shape, and
the notch (143a, 241a, 342a, 441a, 441b) is provided in the terminal part (141, 241, 341, 441).

9. The secondary battery as claimed in claim 8, wherein the notch (143a, 241a, 342a, 441a, 441b) has a circular ring shape disposed along a circumference of the terminal part (141, 241, 341, 441).

10. The secondary battery as claimed in claim 8, wherein the notch (143a, 241a, 342a, 441a, 441b) is branched into at least three pieces at a center of the terminal part (141, 241, 341, 441).

11. The secondary battery as claimed in claim 8, wherein the notch (143a, 241a, 342a, 441a, 441b) has a shape of at least two or more straight lines that are intersected at a center of the terminal part (141, 241, 341, 441).

12. The secondary battery as claimed in claim 8, wherein the notch (143a, 241a, 342a, 441a, 441b) comprises a plurality of notches (143a, 241a, 342a, 441a, 441b) provided in a straight line-shapes radiating outward from an inside of the terminal part (141, 241, 341, 441), and
the plurality of notches (143a, 241a, 342a, 441a, 441b) are provided at regular intervals along a circumference of the terminal part (141, 241, 341, 441).

13. The secondary battery as claimed in claim 1, wherein a portion of the cap-up (140, 240, 340, 440) at which the notch (143a, 241a, 342a, 441a, 441b) is provided has a thickness less than 0.34 times a thickness of the cap-up (140, 240, 340, 440).

14. The secondary battery as claimed in claim 1, wherein an angle of the notch (143a, 241a, 342a, 441a, 441b) ranges of 35° to 80°.

15. The secondary battery as claimed in claim 1, further comprises a safety plate (150) comprising a protrusion (151) installed at a lower portion of the cap-up (140, 240, 340, 440) to protrude downward so as to be electrically connected to the electrode assembly (110),
wherein the safety plate (150) further comprises a curling part (153) coupled to the base plate (143, 243) in a shape that surrounds an edge of the base plate (143, 243),
wherein the notch (143a, 241a, 342a, 441a, 441b) is provided in the base plate (143, 243) and the notch (143a, 241a, 342a, 441a, 441b) is disposed at a position of 0.5 mm to about 0.7 mm from an end of the curling part (153).
